# FASCICULE DE BREVET EUROPEEN

(11) **EP 3 160 773 B1**
(45) Date de publication et mention de la délivrance du brevet: **11.04.2018**
(21) Numéro de dépôt: 15729178.2
(22) Date de dépôt: 16.06.2015
(51) Int. Cl.: B60C 11/12, B60C 11/03, B60C 11/04

(54) **BANDE DE ROULEMENT INCISÉE POUR PNEU GÉNIE CIVIL**
LAUFFLÄCHE MIT INZISIONEN FÜR REIFEN ZIVILER BAUFAHRZEUGE
INCISED TREAD FOR CIVIL ENGINEERING TIRE

(30) Priorité: 24.06.2014 FR 1455866
(43) Date de publication de la demande: 03.05.2017
(73) Titulaire: Compagnie Générale des Etablissements Michelin, 63000 Clermont-Ferrand (FR)
(72) Inventeur: BARBARIN, François, F-63040 Clermont-Ferrand Cedex 9 (FR); DEMAZIERE, Guillaume, F-63040 Clermont-Ferrand Cedex 9 (FR)
(74) Mandataire: Diernaz, Christian
(86) Numéro de dépôt international: PCT/EP2015/063446
(87) Numéro de publication internationale: WO 2015/197429

(56) Documents cités:
- JP-A- 2004 262 295
- JP-A- 2007 191 093
- JP-A- 2008 114 738
- US-A1- 2013 206 299

## Description

### DOMAINE DE L'INVENTION

La présente invention concerne les bandes de roulement de pneu pour véhicule portant de lourdes charges et roulant sur des sols irréguliers tels des mines. Cette invention concerne plus particulièrement la sculpture de telles bandes.

### ÉTAT DE LA TECHNIQUE

Pour assurer une adhérence satisfaisante en motricité et en freinage, il est nécessaire de former sur une bande de roulement une sculpture grâce à un système de découpures et de cavités plus ou moins complexe. Ces découpures et cavités forment un dessin de sculpture à la fois sur la surface dite surface de roulement destinée à venir en contact avec le sol et dans l'épaisseur de la bande.

Il est connu notamment par le document de brevet FR 1452048 de former des découpures larges (dites « rainures ») et des découpures étroites (dites « incisions »). Les incisions ont des largeurs appropriées pour pouvoir se refermer au moins partiellement lors du passage dans la zone de contact avec la chaussée. Ainsi, il est possible de bénéficier de la présence d'arêtes formées à l'intersection des découpures avec une surface de roulement tout en conservant des rigidités suffisantes à la bande dès lors que les parois en vis-à-vis sont en contact l'une contre l'autre.

Le besoin s'est fait sentir d'améliorer la performance en usure des bandes de roulement tout en favorisant la mise à plat de la structure de renforcement du pneu.

### Définitions :

Par direction radiale, on entend dans le présent document une direction qui est perpendiculaire à l'axe de rotation du pneu (cette direction correspond à la direction de l'épaisseur de la bande de roulement).

Par direction transversale ou axiale, on entend une direction parallèle à l'axe de rotation du pneu.

Par direction circonférentielle, on entend une direction qui est tangente à tout cercle centré sur l'axe de rotation. Cette direction est perpendiculaire à la fois à la direction axiale et à une direction radiale.

Plan médian équatorial : c'est un plan perpendiculaire à l'axe de rotation et passant par les points du pneu radialement les plus éloignés dudit axe. Pour une bande de roulement ce plan divise la bande dans sa largeur en deux moitiés d'égales largeurs.

Une nervure est un élément en relief formé sur une bande de roulement, cet élément s'étendant dans la direction circonférentielle et fait en général le tour du pneu. Une nervure comprend deux parois latérales et une face de contact, cette dernière formant une partie de la surface de roulement et étant destinée à venir en contact avec la chaussée pendant le roulage.

Dans le présent document, une découpure désigne de manière générique soit une rainure soit une incision et correspond à l'espace délimité par des parois de matière se faisant face et distantes l'une de l'autre d'une distance (dite "largeur de la découpure"). Ce qui différencie une incision d'une rainure c'est précisément cette distance ; dans le cas d'une incision, cette distance est appropriée pour permettre la mise en contact au moins partielle des parois opposées délimitant ladite incision au moins lors du passage dans le contact avec la chaussée. Dans le cas d'une rainure, les parois de cette rainure ne peuvent venir en contact l'une contre l'autre dans les conditions normales de roulage.

Une bande de roulement a une épaisseur maximale de matière à user en roulage ; une fois cette épaisseur maximale atteinte le pneu peut être remplacé par un pneu neuf ou bien rechapé, c'est-à-dire pourvu d'une nouvelle bande de roulement. Le volume de matière à user correspond pour les pneus de l'invention à la quantité de matière située entre la surface de roulement à l'état neuf et une surface virtuelle parallèle à la surface de roulement à l'état neuf et passant par les points les plus à l'intérieur des découpures formées dans la bande de roulement.

Le taux de creux surfacique d'une sculpture est égal au rapport entre la surface des creux formés par les découpures et cavités et la surface totale (surface de contact des éléments de relief et surface des creux). Un taux de creux faible indique une grande surface de contact des éléments de relief et une faible surface de creux entre ces éléments.

Le taux de creux volumique d'une sculpture d'une bande de roulement à l'état neuf est égal au rapport entre le volume des creux (formés notamment par des découpures, des cavités) formés dans la bande de roulement et le volume total de ladite bande comprenant le volume de matière à user et le volume des creux. Un taux de creux volumique faible indique un faible volume de creux relativement au volume de matière à user de la bande de roulement. De la même façon, il est possible de définir un taux volumique pour une région d'une bande de roulement, cette région étant délimitée axialement.

Les conditions usuelles de roulage du pneu ou conditions d'utilisation sont celles qui sont définies notamment par la norme E.T.R.T.O. pour un usage européen ou toute norme équivalente selon le pays concerné ; ces conditions d'utilisation précisent la pression de gonflage de référence correspondant à la capacité de charge du pneu indiquée par son indice de charge et son code vitesse. Ces conditions d'utilisation peuvent aussi être dites "conditions nominales" ou "conditions d'usage".

L'art antérieur comprend notamment les documents JP 2008 114738 A, JP 2004 262295 A, JP 2007 191093 A, lesquels décrivent des bandes de roulement pour pneu de véhicule portant de très lourdes charges. Aucun de ces documents ne décrit ni ne suggère de relation spécifique associée aux éléments de matière individualisés par des découpures.

### BREF EXPOSE DE L'INVENTION

La présente invention vise à proposer une bande de roulement pour pneu de véhicule portant de très lourdes charges et roulant dans des mines sur des sols irréguliers pouvant être particulièrement agressifs pour les pneus. La bande selon l'invention a un dessin de sculpture permettant à la fois une amélioration de la performance en usure tout en conservant une adhérence appropriée et cela quel que soit l'état d'usure de cette bande. Cette invention est applicable plus particulièrement aux bandes de roulement de grande largeur, à savoir de largeur au moins égale à 700 millimètres (mm). Par ailleurs l'usage de ces pneus est particulièrement contrasté en termes de charge : aller en pleine charge, retour à vide, pas de charge intermédiaire. Lors des phases de roulage à vide, la charge des pneus arrière est divisée par environ trois par rapport aux phases de roulage en pleine charge. Lors des phases de roulage à vide, la quasi-totalité de la charge est supportée par une zone médiane de la bande de roulement.

À cet effet, l'invention a pour objet une bande de roulement pour pneu de véhicule portant de très lourdes charges, cette bande de roulement ayant une largeur totale W et une épaisseur de matière à user, cette bande étant pourvue d'au moins deux découpures d'orientation générale circonférentielle et de profondeur au moins égale à 70 mm et au plus égale à l'épaisseur de matière à user, ces découpures divisant la bande de roulement en une région médiane, et des régions d'épaule délimitant axialement la bande de roulement. La région médiane est définie comme la région de la bande située entre les deux découpures circonférentielles axialement les plus éloignées du plan médian équatorial. Cette région médiane a une largeur axiale au moins égale à 50% et au plus égale à 80% de la largeur totale W de la bande de roulement.

Cette bande de roulement est telle que la région médiane comprend une pluralité d'incisions transversales ou obliques s'ouvrant dans les découpures circonférentielles, ces incisions se fermant au moins en partie lors du passage dans le contact et ayant une profondeur au moins égale à 75% de la profondeur des découpures circonférentielles, ces incisions délimitant une pluralité d'éléments de matière de hauteur égale à la profondeur moyenne H des incisions et de longueur circonférentielle B égale à la distance moyenne entre deux incisions.

Cette zone médiane est telle que le rapport H/B est plus grand que 0.5 et au plus égal à 2.5.

Encore plus préférentiellement, le rapport H/B est au moins égal à 1.0 et au plus égal à 2.0.

De façon avantageuse, le taux de creux volumique Tc de la région médiane est au moins égal à 2% et au plus égal à 12%. Par taux de creux volumique de la zone médiane on entend la valeur du rapport entre le volume total de creux présent à l'état neuf dans la zone médiane de la bande de roulement selon l'invention et le volume total de cette zone médiane, ce volume total incluant le volume total des creux.

De manière préférentielle, le taux de creux volumique de la région médiane est au moins égal à 2% et au plus égal à 6%.

Dans une variante intéressante de l'invention le taux de creux volumique est compris entre 2 et 12 % (et encore plus préférentiellement entre 2 et 6%) pour l'ensemble de la bande de roulement tout en satisfaisant à un taux de creux volumique de la région médiane au moins égal à 2% et au plus égal à 12% (et encore plus préférentiellement entre 2 et 6%).

De façon avantageuse, l'angle des incisions est au moins égal à 45 degrés avec la direction circonférentielle.

De manière connue, les incisions formées dans la bande de roulement selon l'invention peuvent être pourvues de moyens de blocage limitant les mouvements relatifs des parois en vis-à-vis délimitant ces incisions. Ces moyens de blocage sont d'autant plus utiles que le rapport H/B augmente et qu'en fonction de l'usage le coefficient de frottement entre ces parois diminue du fait de la présence de corps étrangers. Afin de limiter la réduction de rigidité de la bande liée à la présence de cette pluralité d'incisions, il est judicieux de prévoir qu'au moins une partie des incisions comportent des moyens de blocage des mouvements relatifs des parois en vis-à-vis délimitant ces incisions.

Dans une variante intéressante de l'invention, au moins une zone épaule - zone limitant axialement la bande de roulement - est pourvue d'une pluralité d'incisions transversales ou obliques s'ouvrant sur un côté dans une découpure circonférentielle délimitant cette région épaule et sur l'autre côté sur l'extérieur de la bande de roulement, ces incisions se fermant au moins en partie lors du passage dans le contact et ayant une profondeur au moins égale à 75% de la profondeur des découpures circonférentielles. Ces incisions délimitent une pluralité d'éléments de matière de hauteur égale à la profondeur moyenne H* des incisions transversales ou obliques et de longueur circonférentielle B* égale à la distance moyenne entre deux incisions transversales ou obliques.

Cette région épaule est telle que le rapport H*/B* est plus grand que 0.5 et au plus égal à 2.5. Préférentiellement, la région épaule est telle que le rapport H*/B* est au moins égal à 1 et au plus égal à 2.

Selon une variante de l'invention, on prévoit la présence dans la direction circonférentielle d'une alternance d'incisions pourvues de moyens de blocage et d'incisions dépourvues de tels moyens. Si on note B' la longueur entre deux incisions dépourvues de moyen de blocage, ces deux incisions encadrant une incision ou plusieurs incisions pourvues de moyens de blocage, alors il est judicieux que le rapport H/B' soit inférieur à 1 voire encore plus préférentiellement inférieur à 0.7.

Il est connu que la forme externe d'un pneu est affectée par la mise sous pression du pneu. Compte tenu de ce mécanisme, il est préférable de positionner les découpures les plus à l'extérieur axialement de manière à ce que la largeur de la région médiane soit égale à au moins 70% et au plus 80% de la largeur totale de la bande de roulement.

Dans une variante intéressante de l'invention, on prévoit d'utiliser, au moins dans la région médiane, un mélange de caoutchouc tel que décrit dans l'un ou l'autre des demandes de brevet FR 14/50965 et FR 14/50967 toutes deux déposées en France le 07.02.2014. Cette combinaison avec une sculpture à faible taux de creux, permet d'obtenir un excellent compromis combinant à la fois un niveau élevé de rigidité favorable pour l'usure et un niveau thermique abaissé en usage.

D'autres caractéristiques et avantages de l'invention ressortent de la description faite ci-après en référence aux dessins annexés qui montrent, à titre d'exemples non limitatifs, des formes de réalisation de l'objet de l'invention.

### BREVE DESCRIPTION DES FIGURES

La figure 1 représente une vue partielle en plan du dessin de la sculpture d'une bande de roulement selon une première variante ;
La figure 2 montre une coupe selon un plan II-II dont la trace est repérée sur la vue en plan montrée avec la figure 1 ;
La figure 3 montre une vue partielle du dessin d'une bande de roulement selon une deuxième variante de l'invention ;
La figure 4 montre en coupe une autre variante de l'invention.

### DESCRIPTION DES FIGURES

Pour faciliter la lecture des figures, des mêmes signes de référence sont employés pour la description de variantes de l'invention dès lors que ces signes de référence renvoient à des éléments d'une même nature qu'elle soit structurelle ou bien fonctionnelle.

Les figures servent de support à la description sans toutefois prétendre montrer les variantes à l'échelle.

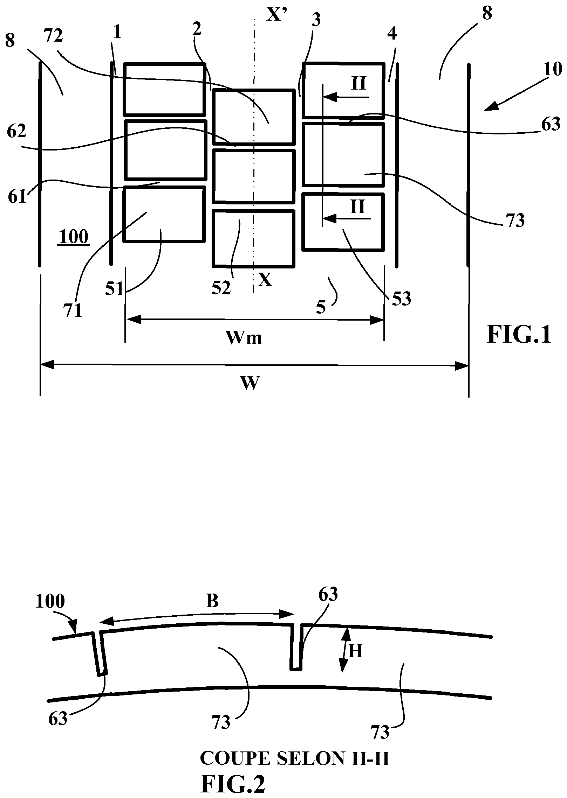

La figure 1 représente une vue partielle d'une première variante d'une bande de roulement 10 d'un pneu selon l'invention montrée en plan.

Cette bande de roulement 10 est destinée à équiper un pneu radial de dimension 40.00 R 57 lui-même destiné à équiper un véhicule de type tombereau rigide (« *dumper »* en langue anglaise) pour porter de très lourdes charges.

Cette bande de roulement 10 a une largeur totale W égale à 997 mm et destinée à venir en contact avec le sol par une surface de roulement 100 pendant le roulage.

Cette bande de roulement 10 comprend quatre découpures circonférentielles 1, 2, 3, 4 de largeur égale à 8 mm sur la surface de roulement du pneu à l'état neuf et de profondeur égale à 71 mm. En fond de chaque découpure la largeur est égale à 6 mm (cette hauteur est mesurée en limite d'usure). Ces découpures circonférentielles ont une largeur telle que lors du passage dans le contact les parois délimitant lesdites découpures viennent en contact l'une contre l'autre.

Ces découpures circonférentielles 1, 2, 3, 4 sont disposées de manière symétrique par rapport au plan médian équatorial repéré par la ligne XX' sur la figure 1 et à des distances égales à 100 mm et à 300 mm (pour les découpures axialement les plus à l'extérieur) de ce plan médian.

On définit une région médiane 5 comme étant la région délimitée axialement par les deux découpures circonférentielles 1 et 4 axialement les plus éloignées l'une de l'autre. Dans le cas présent, la largeur Wm de cette région médiane 5 est égale à 606 mm.

Cette région médiane 5 comprend trois rangées circonférentielles 51, 52, 53 délimitées chacune par deux découpures circonférentielles. Chaque rangée circonférentielle 51, 52, 53 est pourvue d'une pluralité d'incisions, respectivement 61, 62, 63, ces incisions étant orientées dans la direction transversale perpendiculaire à la direction circonférentielle et donc parallèle à la direction de l'axe de rotation du pneu pourvu de cette bande. Chaque incision transversale 61, 62, 63 s'ouvre de part et d'autre dans une découpure circonférentielle. Par ailleurs, ces incisions transversales sont décalées les unes des autres dans la direction circonférentielle d'une rangée à l'autre.

Ces incisions transversales avec les découpures circonférentielles délimitent dans chaque rangée circonférentielle 51, 52, 53 une pluralité d'éléments de matière 71, 72, 73 respectivement dont la hauteur moyenne correspond à la profondeur moyenne desdites incisions et découpures.

Axialement à l'extérieur de la région médiane sont formées des nervures continues circonférentiellement et dépourvues d'incisions.

La bande de roulement 10 est limitée axialement par des régions d'épaule 8 dépourvues de toute incisions transversales ou obliques.

Sur la figure 2 montrant une vue partielle selon une coupe dans un plan perpendiculaire à l'axe de rotation, cette coupe étant repérée par sa trace II-II sur la figure 1, on voit la répartition des incisions 63 formée dans la rangée circonférentielle 53.

Ces incisions 63 ont pour caractéristiques dimensionnelles :
- profondeur moyenne H égale à 70 mm
- largeur égale à 8 mm en surface ; 6 mm au fond.

Ces incisions 63 délimitent avec les découpures 3 et 4 une pluralité d'éléments de matière 73 ayant une hauteur égale à la profondeur H des incisions (soit 70 mm) et une longueur circonférentielle B sur la surface de roulement 100 égale à 130 mm. Les autres incisions transversales 61, 62 ont les mêmes caractéristiques dimensionnelles. Dans ces conditions, l'épaisseur de matière à user de la bande de roulement est égale à 71 mm.

Sous des conditions d'usage correspondant à une charge de 60 tonnes et une pression de gonflage égale à 6 bars, on observe une fermeture partielle des incisions lors du passage dans la région de contact avec le sol ; ce contact des parois en vis-à-vis affecte environ au moins 33% de la surface des parois délimitant chaque incision (c'est-à-dire qu'il y a contact sur au moins 33%).

Les incisions de la présente variante sont dépourvues de tout moyen de blocage des mouvements relatifs entre les parois délimitant chaque incision ; dans une variante non montrée, les incisions peuvent de manière connue être pourvues de tels moyens de blocage (géométrie des parois ondulées ou en zigzag, présence d'une pluralité de creux et bosses adaptés pour coopérer entre eux).

Dans ces conditions et entre deux incisions 63, l'élément de matière présente donc un rapport H/B égal à 0.54 (= 70/130). Ce même rapport H/B se retrouve pour les deux autres rangées circonférentielles 51, 52.

Grâce aux dispositions selon l'invention décrites notamment avec cette première variante, il a été possible d'améliorer sensiblement la tenue en usure tout en conservant une adhérence appropriée cela quel que soit l'état d'usure de la bande de roulement.

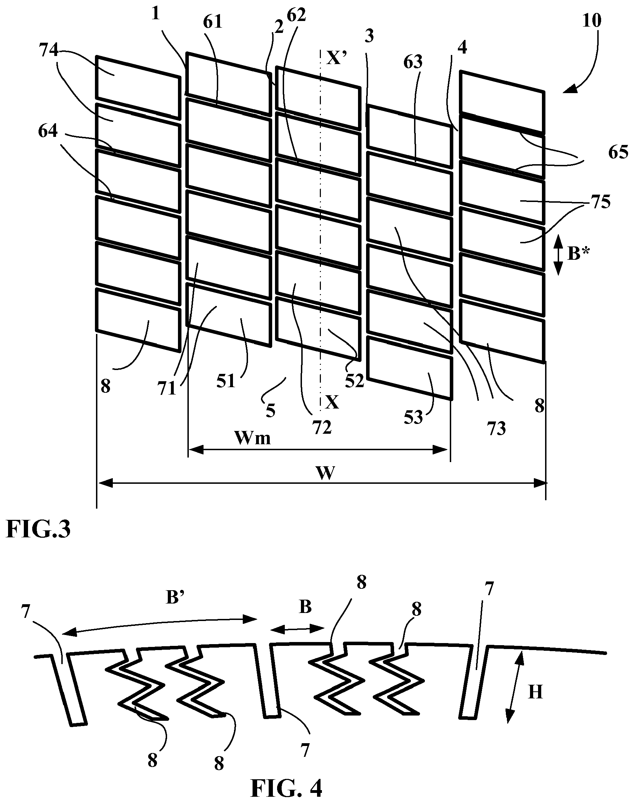

La figure 3 montre une vue partielle d'une bande de roulement selon une deuxième variante de l'invention.

Le pneu selon cette variante est de même dimension que pour le premier exemple de l'invention, à savoir un pneu de dimension 40.00 R 57. Ce pneu est pourvu d'une bande de roulement 10 de largeur totale W égale à 997 mm.

Cette bande de roulement comprend quatre découpures circonférentielles 1, 2, 3, 4 de largeur 8 mm en surface et 6 mm en fond de sculpture et de profondeur 71 mm.

Ces découpures circonférentielles 1, 2, 3, 4 sont disposées de manière symétrique par rapport au plan médian équatorial XX' et à des distances égales à 100 mm et à 300 mm de ce plan. Ces découpures circonférentielles délimitent des rangées circonférentielles dont deux forment des régions épaules 8.

On définit une région médiane 5 délimitée axialement par les deux découpures circonférentielles 1, 4 axialement les plus éloignées l'une de l'autre. Dans le cas présent, la largeur Wm de la région médiane est égale à 606 mm.

Cette région médiane 5 comprend trois rangées circonférentielles 51, 52, 53 et sur chaque rangée circonférentielle une pluralité d'incisions orientées de façon oblique par rapport à la direction transversale, l'angle de ces incisions obliques étant égal à 15 degrés.

Chaque incision oblique s'ouvre de part et d'autre dans une découpure et délimite sur chaque rangée circonférentielle 51, 52, 53 une pluralité d'éléments de matière 71, 72, 73 respectivement.

Ces incisions obliques de la région médiane 5 ont une profondeur moyenne H égale à 70 mm et ont en alternance soit une largeur très petite (égale ou proche de zéro) soit une largeur égale à 8 mm en surface de la bande de roulement.

La distance moyenne B entre les incisions est égale à 65 mm.

Dans ces conditions, le rapport H/B des éléments de matière formés sur la partie médiane est égal à 1.08 (= 70/65)

En outre, chaque région épaule 8 située axialement à l'extérieur de la région médiane 5 et limitant axialement la bande de roulement 10 est pourvue d'une pluralité d'incisions obliques 64, 65 respectivement. Ces incisions obliques sont orientées dans une même direction oblique faisant un angle de 15 degrés avec la direction axiale, à l'identique des incisions obliques de la région médiane. Chacune des incisions obliques des régions épaule s'ouvre d'un côté dans une découpure circonférentielle et de l'autre à l'extérieur de la bande de roulement.

Les incisions obliques 64, 65 formées sur les régions épaule ont pour caractéristiques dimensionnelles :
- une profondeur moyenne H* variable dans la largeur, cette profondeur étant en moyenne égale à 45 mm ;
- une largeur voisine de 0 mm (dans ce cas les parois en vis-à-vis délimitant une incision sont en contact sur au moins une partie de la surface de ces parois ) ;
- la distance circonférentielle B* entre deux incisions successives égale à 68 mm.

Entre deux incisions des régions épaule, chaque élément de matière présente un rapport H*/B* égal à 0.66 (= 45/68).

Dans cette deuxième variante, la région médiane 5 et les régions épaule 8 satisfont toutes les deux la condition posée par l'invention à savoir un rapport hauteur sur longueur circonférentielle compris entre 0.5 et 2.5.

Selon une autre variante de l'invention dont une coupe est montrée avec la figure 4, on prévoit la présence, dans la direction circonférentielle des rangées circonférentielles de la région médiane, d'une alternance d'incisions transversales 8 pourvues de moyens de blocage et d'incisions transversales 7 dépourvues de tels moyens. Dans l'exemple montré, deux incisions 7 dépourvues de moyens de blocage encadrent deux incisions 8 pourvues de tels moyens (ici sous la forme d'une géométrie en zigzag).

Si on note B' la longueur entre deux incisions 7 dépourvues de moyen de blocage, alors il est judicieux que le rapport H/B' soit inférieur à 1 voire encore plus préférentiellement inférieur à 0.7 tandis que le rapport H/B est plus grand que 0.5 et au plus égal à 2.5. Dans ces rapports, la grandeur H représente la hauteur des éléments de matière formés par les incisions (cette hauteur est égale à la profondeur moyenne de ces incisions). Dans le cas montré le rapport H/B est égal à 1.8, et le rapport H/B' est égal à 0.6. L'avantage d'une telle variante réside dans un meilleur compromis rigidité de la bande de roulement en usage et facilité de démoulage en fabrication.

L'invention qui a été décrite avec le support de ces exemples ne saurait bien entendu être limitée à ces exemples et diverses modifications peuvent y être apportées sans sortir du cadre défini par les revendications.

## Revendications

1. Bande de roulement (10) pour pneu de véhicule portant de très lourdes charges, cette bande de roulement (10) ayant une largeur totale W et une épaisseur de matière à user, cette bande de roulement (10) étant pourvue d'au moins deux découpures d'orientation générale circonférentielle (1, 2, 3, 4) et de profondeur moyenne au moins égale à 70 mm et au plus égale à l'épaisseur de matière à user, ces découpures circonférentielles (1, 2, 3, 4) divisant la bande de roulement en une région médiane (5), et des régions d'épaule délimitant axialement la bande de roulement, la région médiane (5) étant définie comme la région de la bande située entre les deux découpures circonférentielles (1, 4) axialement les plus éloignées du plan médian équatorial, cette région médiane (5) ayant une largeur axiale Wm au moins égale à 50% et au plus égale à 80% de la largeur totale W de la bande de roulement, cette bande de roulement (10) étant telle que la région médiane (5) comprend une pluralité d'incisions transversales ou obliques (61, 62, 63) s'ouvrant dans les découpures circonférentielles (1, 2, 3, 4), ces incisions transversales ou obliques (61, 62, 63) se fermant au moins en partie lors du passage dans le contact et ayant une profondeur au moins égale à 75% de la profondeur des découpures circonférentielles, ces incisions transversales ou obliques (61, 62, 63) délimitant une pluralité d'éléments de matière de hauteur égale à la profondeur moyenne H desdites incisions et de longueur circonférentielle B égale à la distance moyenne entre deux incisions transversales ou obliques (61, 62, 63), cette bande de roulement (10) étant **caractérisée en ce que**, pour tous les éléments de matière délimités par deux incisions consécutives dans la région médiane, le rapport H/B est supérieur à 0.5 et au plus égal à 2.5.

2. Bande de roulement (10) selon la revendication 1 **caractérisée en ce que** le rapport H/B est au moins égal à 1.0 et au plus égal à 2.0.

3. Bande de roulement (10) selon la revendication 1 ou la revendication 2 **caractérisée en ce que** le taux de creux volumique Tc de la région médiane (5) est au moins égal à 2% et au plus égal à 12%.

4. Bande de roulement (10) selon la revendication 3 **caractérisée en ce que** le taux de creux volumique Tc de la région médiane est au moins égal à 2% et au plus égal à 10%.

5. Bande de roulement (10) selon l'une quelconque des revendications 1 à 4 **caractérisée en ce que** l'angle des incisions transversales ou obliques (61, 62, 63) est au moins égal à 45 degrés avec la direction circonférentielle.

6. Bande de roulement (10) selon l'une quelconque des revendications 1 à 5 **caractérisée en ce qu'**au moins une partie des incisions transversales ou obliques (61, 62, 63) comportent des moyens de blocage des mouvements relatifs des parois en vis-à-vis délimitant ces incisions.

7. Bande de roulement (10) selon l'une quelconque des revendications 1 à 6 **caractérisée en ce qu'**au moins une région épaule - région limitant axialement la bande de roulement - est pourvue d'une pluralité d'incisions transversales ou obliques (64, 65) s'ouvrant sur un côté dans une découpure circonférentielle délimitant cette région épaule et sur l'autre côté sur l'extérieur de la bande de roulement, ces incisions transversales ou obliques (64, 65) se fermant au moins en partie lors du passage dans le contact et ayant une profondeur au moins égale à 75% de la profondeur des découpures circonférentielles, et ces incisions transversales ou obliques (64, 65) délimitant une pluralité d'éléments de matière de hauteur égale à la profondeur moyenne H* des incisions transversales ou obliques (64, 65) de la région épaule et de longueur circonférentielle B* égale à la distance moyenne entre deux incisions transversales ou obliques (64, 65), cette région épaule étant telle que le rapport H*/B* est plus grand que 0.5 et au plus égal à 2.5.

8. Bande de roulement (10) selon la revendication 7 **caractérisée en ce que** la région épaule est telle que le rapport H*/B* est au moins égal à 1 et au plus égal à 2.

9. Bande de roulement (10) selon l'une quelconque des revendications 1 à 8 **caractérisée en ce qu'**elle comprend dans la direction circonférentielle une alternance d'incisions pourvues de moyens de blocage et d'incisions dépourvues de tels moyens, deux incisions dépourvues de moyen de blocage encadrant une incision ou plusieurs incisions pourvues de moyens de blocage.

10. Bande de roulement (10) selon la revendication 9 **caractérisée en ce que** la distance B' entre deux incisions dépourvues de moyen de blocage est telle que le rapport H/B' est inférieur à 1.

11. Bande de roulement (10) selon la revendication 10 **caractérisée en ce que** la distance B' entre deux incisions dépourvues de moyen de blocage est telle que le rapport H/B' est inférieur à 0.7

12. Bande de roulement (10) selon l'une quelconque des revendications 1 à 11 **caractérisée en ce que** le taux de creux volumique de l'ensemble de la bande de roulement est compris entre 2 et 12 % et **en ce que** le taux de creux volumique de la région médiane de la bande de roulement est au moins égal à 2% et au plus égal à 14%, et encore plus préférentiellement compris entre 2% et 10%.

13. Pneu comprenant une bande de roulement (10) selon l'une quelconque des revendications 1 à 12 **caractérisée en ce que** la largeur Wm de la région médiane est égale à au moins 70% et au plus 80% de la largeur totale W de la bande de roulement.

## Patentansprüche

1. Laufstreifen (10) für einen Reifen eines Fahrzeugs, das sehr schwere Lasten trägt, wobei dieser Laufstreifen (10) eine Gesamtbreite W und eine zu verschleißende Materialstärke aufweist, wobei dieser Laufstreifen (10) mit wenigstens zwei allgemein in Umfangsrichtung ausgerichteten Ausschnitten (1, 2, 3, 4) mit einer mittleren Tiefe, die mindestens 70 mm beträgt und höchstens gleich der zu verschleißenden Materialstärke ist, versehen ist, wobei diese in Umfangsrichtung verlaufenden Ausschnitte (1, 2, 3, 4) den Laufstreifen in einen mittleren Bereich (5) und Schulterbereiche, die den Laufstreifen axial begrenzen, aufteilen, wobei der mittlere Bereich (5) als der Bereich des Laufstreifens definiert ist, der sich zwischen den zwei in Umfangsrichtung verlaufenden Ausschnitten (1, 4) befindet, die von der äquatorialen Mittelebene axial am weitesten entfernt sind, wobei dieser mittlere Bereich (5) eine axiale Breite Wm aufweist, die mindestens gleich 50 % und höchstens gleich 80 % der Gesamtbreite W des Laufstreifens ist, wobei dieser Laufstreifen (10) derart beschaffen ist, dass der mittlere Bereich (5) mehrere quer oder schräg verlaufende Einschnitte (61, 62, 63) umfasst, die sich in die in Umfangsrichtung verlaufenden Ausschnitten (1, 2, 3, 4) öffnen, wobei sich diese quer oder schräg verlaufende Einschnitte (61, 62, 63) beim Übergang in den Kontakt wenigstens teilweise schließen und eine Tiefe von wenigstens 75 % der Tiefe der in Umfangsrichtung verlaufenden Ausschnitte aufweisen, wobei diese quer oder schräg verlaufenden Einschnitte (61, 62, 63) mehrere Materialelemente mit einer Höhe, die gleich der mittleren Tiefe H dieser Einschnitte ist, und einer Länge in Umfangsrichtung B, die gleich dem mittleren Abstand zwischen zwei quer oder schräg verlaufenden Einschnitten (61, 62, 63) ist, begrenzen, wobei dieser Laufstreifen (10) **dadurch gekennzeichnet ist, dass** für alle von zwei aufeinander folgenden Einschnitten begrenzte Materialelemente im mittleren Bereich das Verhältnis H/B größer als 0,5 und höchstens gleich 2,5 ist.

2. Laufstreifen (10) nach Anspruch 1, **dadurch gekennzeichnet, dass** das Verhältnis H/B mindestens gleich 1,0 und höchstens gleich 2,0 ist.

3. Laufstreifen (10) nach Anspruch 1 oder Anspruch 2, **dadurch gekennzeichnet, dass** der volumetrische Hohlraumanteil Tc des mittleren Bereichs (5) mindestens gleich 2 % und höchstens gleich 12 % ist.

4. Laufstreifen (10) nach Anspruch 3, **dadurch gekennzeichnet, dass** der volumetrische Hohlraumanteil Tc des mittleren Bereichs mindestens gleich 2 % und höchstens gleich 10 % ist.

5. Laufstreifen (10) nach einem der Ansprüche 1 bis 4, **dadurch gekennzeichnet, dass** der Winkel der quer oder schräg verlaufenden Einschnitte (61, 62, 63) mit der Umfangsrichtung mindestens gleich 45 Grad ist.

6. Laufstreifen (10) nach einem der Ansprüche 1 bis 5, **dadurch gekennzeichnet, dass** wenigstens ein Teil der quer oder schräg verlaufenden Einschnitte (61, 62, 63) Mittel zur Blockierung der relativen Bewegungen der einander gegenüberliegenden Wände, die diese Einschnitte begrenzen, aufweist.

7. Laufstreifen (10) nach einem der Ansprüche 1 bis 6, **dadurch gekennzeichnet, dass** wenigstens ein Schulterbereich - ein Bereich, der den Laufstreifen axial begrenzt - mit mehreren quer oder schräg verlaufenden Einschnitten (64, 65) versehen ist, die sich auf einer Seite in einen in Umfangsrichtung verlaufenden Ausschnitt, der diesen Schulterbereich begrenzt, und auf der anderen Seite zur Außenseite des Laufstreifens hin öffnen, wobei sich diese quer oder schräg verlaufenden Einschnitte (64, 65) beim Übergang in den Kontakt wenigstens teilweise schließen und eine Tiefe von wenigstens 75 % der Tiefe der in Umfangsrichtung verlaufenden Ausschnitte aufweisen, und wobei diese quer oder schräg verlaufenden Einschnitte (64, 65) mehrere Materialelemente mit einer Höhe, die gleich der mittleren Tiefe H* der quer oder schräg verlaufenden Einschnitte (64, 65) des Schulterbereichs ist, und einer Länge in Umfangsrichtung B*, die gleich dem mittleren Abstand zwischen zwei quer oder schräg verlaufenden Einschnitten (64, 65) ist, begrenzen, wobei dieser Schulterbereich so beschaffen ist, dass das Verhältnis H*/B* größer als 0,5 und höchstens gleich 2,5 ist.

8. Laufstreifen (10) nach Anspruch 7, **dadurch gekennzeichnet, dass** der Schulterbereich so beschaffen ist, dass das Verhältnis H*/B* mindestens gleich 1 und höchstens gleich 2 ist.

9. Laufstreifen (10) nach einem der Ansprüche 1 bis 8, **dadurch gekennzeichnet, dass** er in der Umfangsrichtung eine Wechselfolge von Einschnitten, die mit Blockiermitteln versehen sind, und Einschnitten, die nicht mit solchen Mitteln versehen sind, umfasst, wobei zwei nicht mit einem Blockiermittel versehene Einschnitte einen Einschnitt oder mehrere mit Blockiermitteln versehene Einschnitte umrahmen.

10. Laufstreifen (10) nach Anspruch 9, **dadurch gekennzeichnet, dass** der Abstand B' zwischen zwei nicht mit einem Blockiermittel versehenen Einschnitten so beschaffen ist, dass das Verhältnis H/B' kleiner als 1 ist.

11. Laufstreifen (10) nach Anspruch 10, **dadurch gekennzeichnet, dass** der Abstand B' zwischen zwei nicht mit einem Blockiermittel versehenen Einschnitten so beschaffen ist, dass das Verhältnis H/B' kleiner als 0,7 ist.

12. Laufstreifen (10) nach einem der Ansprüche 1 bis 11, **dadurch gekennzeichnet, dass** der volumetrische Hohlraumanteil des gesamten Laufstreifens zwischen 2 und 12 % liegt, und dadurch, dass der volumetrische Hohlraumanteil des mittleren Bereichs des Laufstreifens mindestens gleich 2 % und höchstens gleich 14 % ist und, noch stärker bevorzugt, zwischen 2 % und 10 % liegt.

13. Reifen, welcher einen Laufstreifen (10) nach einem der Ansprüche 1 bis 12 umfasst, **dadurch gekennzeichnet, dass** die Breite Wm des mittleren Bereichs mindestens gleich 70 % und höchstens gleich 80 % der Gesamtbreite W des Laufstreifens ist.

## Claims

1. Tread (10) for a tyre of a vehicle carrying very heavy loads, this tread (10) having a total width W and a thickness of wearable material, this tread (10) being provided with at least two cuts (1, 2, 3, 4) of circumferential overall orientation and of mean depth at least equal to 70 mm and at most equal to the thickness of wearable material, these circumferential cuts (1, 2, 3, 4) dividing the tread into a middle region (5), and shoulder regions axially delimiting the tread, the middle region (5) being defined as the region of the tread situated between the two circumferential cuts (1, 4) axially furthest away from the equatorial median plane, this middle region (5) having an axial width Wm at least equal to 50% and at most equal to 80% of the total width W of the tread, this tread (10) being such that the middle region (5) comprises a plurality of transverse or oblique sipes (61, 62, 63) opening into the circumferential cuts (1, 2, 3, 4), these transverse or oblique sipes (61, 62, 63) closing at least in part when they enter the contact patch and having a depth at least equal to 75% of the depth of the circumferential cuts, these transverse or oblique sipes (61, 62, 63) delimiting a plurality of elements of material of height equal to the mean depth H of the said sipes and of circumferential length B equal to the mean distance between two transverse or oblique sipes (61, 62, 63), this tread (10) being **characterized in that**, for all the elements of material which are delimited by two consecutive sipes in the middle region, the ratio H/B is greater than 0.5 and at most equal to 2.5.

2. Tread (10) according to Claim 1, **characterized in that** the ratio H/B is at least equal to 1.0 and at most equal to 2.0.

3. Tread (10) according to Claim 1 or Claim 2, **characterized in that** the void volume ratio Tc of the middle region (5) is at least equal to 2% and at most equal to 12%.

4. Tread (10) according to claim 3, **characterized in that** the void volume ratio Tc of the middle region is at least equal to 2% and at most equal to 10%.

5. Tread (10) according to any one of Claims 1 to 4, **characterized in that** the angle of the transverse or oblique sipes (61, 62, 63) is at least equal to 45° to the circumferential direction.

6. Tread (10) according to any one of Claims 1 to 5, **characterized in that** at least some of the transverse or oblique sipes (61, 62, 63) comprise means for blocking the relative movements of the opposing walls that delimit these sipes.

7. Tread (10) according to any one of Claims 1 to 6, **characterized in that** at least one shoulder region - a region axially limiting the tread - is provided with a plurality of transverse or oblique sipes (64, 65) opening on one side into a circumferential cut delimiting this shoulder region and on the other side onto the outside of the tread, these transverse or oblique sipes (64, 65) closing at least in part when they enter the contact patch and having a depth at least equal to 75% of the depth of the circumferential cuts, and these transverse or oblique sipes (64, 65) delimiting a plurality of elements of material of height equal to the mean depth H* of the transverse or oblique sipes (64, 65) of the shoulder region and of circumferential length B* equal to the mean distance between two transverse or oblique sipes (64, 65), this shoulder region being such that the ratio H*/B* is greater than 0.5 and at most equal to 2.5.

8. Tread (10) according to Claim 7, **characterized in that** the shoulder region is such that the ratio H*/B* is at least equal to 1 and at most equal to 2.

9. Tread (10) according to any one of Claims 1 to 8, **characterized in that** it comprises, in the circumferential direction, an alternation of sipes provided with blocking means and of sipes not provided with such means, two sipes not provided with blocking means flanking one sipe or several sipes that are provided with blocking means.

10. Tread (10) according to Claim 9, **characterized in that** the distance B' between two sipes that are not provided with blocking means is such that the ratio H/B' is less than 1.

11. Tread (10) according to Claim 10, **characterized in that** the distance B' between two sipes that are not provided with blocking means is such that the ratio H/B' is less than 0.7.

12. Tread (10) according to any one of Claims 1 to 11, **characterized in that** the void volume ratio of the tread as a whole is comprised between 2 and 12% and **in that** the void volume ratio of the middle region of the tread is at least equal to 2% and at most equal to 14%, and more preferably comprised between 2% and 10%.

13. Tyre comprising a tread (10) according to any one of Claims 1 to 12, **characterized in that** the width Wm of the middle region is equal to at least 70% and at most 80% of the total width W of the tread.
